# EUROPEAN PATENT APPLICATION

(11) **EP 3 878 542 A1**
(43) Date of publication of application: **15.09.2021**
(21) Application number: 20162273.5
(22) Date of filing: 11.03.2020
(51) Int. Cl.: B01D 61/14

(54) **FILTER MEMBRANES AS ANTIFOAM LEVEL SAFEGUARDS**

(71) Applicant: Bayer AG, 51373 Leverkusen (DE)
(72) Inventor: Buyel, Joschka, 50679 Köln (DE); Classen, Sven, 51381 Leverkusen (DE)
(74) Representative: BIP Patents

(57) **Abstract**

What is disclosed herein relates to the use of at least one filter membrane as detector of simethicone level.

## Description

In biotechnological processes antifoam agents are often used to prevent foam building and decrease shear stress of cells. Antifoam is a complex emulsion which main ingredient (3% w/w in working solution) is Polydimethylsiloxane (PDMS) of different lengths where the average is around ∼ 27000 Da. Polydimethylsiloxane in turn is a mixture of silicon dioxid and simethicone. The latter is found in various antifoam agents on the market (e.g. Antifoam C, ExCell Antifoam or FoamAway). Even though no toxicological limit is known for i.v. administration antifoam agents are considered a process-related impurity and hence fall within the ICH Q3A(R2) regulations *inter alia* of the European Medical Agency.

Hence there is a need to demonstrate sufficient simethicone depletion in biotechnological processes.

This need can be met via the use of at least one filter membranes as detector of simethicone level.

It was surprisingly discovered that sufficient simethicone and hence antifoam depletion can be reliably demonstrated by the incorporation of at least one filter membrane in the production process that blocks at a certain simethicone concentration (pressure at physical pressure limit of material). Hence, as the filter membrane was found to block at simethicone concentrations far below the tolerable simethicone level, in turn if the filter did not block the simethicone - and hence antifoam levels - have to be even lower. In other words, it is guaranteed that simethicone - and hence antifoam - is sufficiently depleted. Therefore, via using the filter membrane no time consuming spiking studies may need to be performed and validated at manufacturing scale leading to a faster and cheaper process development and approval.

As used herein the term "filter membrane" is used synonymously with the term "filter" and refers to a sterile filter with a polyvinylidene fluoride (polyvinylidene difluoride, PVDF) membrane and a pore size between 0,1 µm and 0,3 µm preferably between 0,2 µm and 0,22 µm.

Examples of suitable PVDF filter membranes are Durapore KVGL Sterile Filter, Hydrophilic modified PVDF, Durapore® 0.22 µm Optiscale or Mini Kleenpak KM5DFLP2S. A person skilled in the art is aware that any sterile PVDF filter with the given pore size can be used in a similar fashion.

As used herein the term "detector" refers to the fact that the filter membrane indicates - i.e. blocks - if the level of simethicone is above a certain threshold wherein said threshold is below the desired simethicone level.

In a preferred embodiment of the use described herein the at least one filter membrane blocks at a simethicone level of between 0.001 mg/L - 10 mg/L, preferably 1.2 mg/L - 5.5 mg/L and thus indicates a simethicone level which is usually still below the required level but further depletion steps/ and or analysis is recommended. A skilled person knows how to determine the allowed simethicone level which is product concentration depended (cf. Table 1).

| Table 1 Allowed simethicone levels | | | | | | |
|---|---|---|---|---|---|---|
| Product [mg/L] | Ensured Maximum Simethicone capacity of filter membrane [mg/L] | mg Simethicone/ mg Antibody | mg Simethicone in 150 mg Product | Allowed Simethicone <0.1% [mg] | Fold Change required | Log-reduction required. |
| 1000 | 1.2 | 0.12% | 0.18 | 0.15 | 1.20 | 0.07918125 |
| 1500 | 1.2 | 0.08% | 0.12 | 0.15 | 0.80 | -0.09691 |
| 2000 | 1.2 | 0.06% | 0.09 | 0.15 | 0.60 | -0.2218487 |
| 3000 | 1.2 | 0.04% | 0.06 | 0.15 | 0.40 | -0.39794 |
| 4000 | 1.2 | 0.03% | 0.045 | 0.15 | 0.30 | -0.5228787 |
| 5000 | 1.2 | 0.02% | 0.036 | 0.15 | 0.24 | -0.6197888 |
| 6000 | 1.2 | 0.02% | 0.03 | 0.15 | 0.20 | -0.69897 |
| 7000 | 1.2 | 0.02% | 0.025714286 | 0.15 | 0.17 | -0.7659168 |
| 8000 | 1.2 | 0.02% | 0.0225 | 0.15 | 0.15 | -0.8239087 |
| 9000 | 1.2 | 0.01% | 0.02 | 0.15 | 0.13 | -0.8750613 |
| 10000 | 1.2 | 0.01% | 0.018 | 0.15 | 0.12 | -0.9208188 |

| Product [mg/L] | Ensured Maximum Simethicone capacity of filter membrane [mg/L] | mg Simethicone/ mg Antibody | mg Simethicone in 150 mg Product | Allowed Simethicone <0.1% [mg] | Fold Change required | Log-reduction required. |
|---|---|---|---|---|---|---|
| 1000 | 5.5 | 0.55% | 0.825 | 0.15 | 5.50 | 0.74036269 |
| 1500 | 5.5 | 0.37% | 0.55 | 0.15 | 3.67 | 0.56427143 |
| 2000 | 5.5 | 0.28% | 0.4125 | 0.15 | 2.75 | 0.43933269 |
| 3000 | 5.5 | 0.18% | 0.275 | 0.15 | 1.83 | 0.26324143 |
| 4000 | 5.5 | 0.14% | 0.20625 | 0.15 | 1.38 | 0.1383027 |
| 5000 | 5.5 | 0.11% | 0.165 | 0.15 | 1.10 | 0.04139269 |
| 6000 | 5.5 | 0.09% | 0.1375 | 0.15 | 0.92 | -0.0377886 |
| 7000 | 5.5 | 0.08% | 0.117857143 | 0.15 | 0.79 | -0.1047354 |
| 8000 | 5.5 | 0.07% | 0.103125 | 0.15 | 0.69 | -0.1627273 |

To a person skilled in the art it is clear that if a filter blocks it is likely due to components such as simethicone and PEG and hence if the filter performs as desired the concentration of these agents need to be below the desired values.

As used herein the expression "filter blocks" refers to the fact that if components accumulate on a filter membrane a process stream cannot pass freely through the filter membrane and hence the pressure required to keep the process stream moving is increased until the manufacturers maximum recommended pressure is reached - e.g. in the case of the exemplary used filter membranes this recommended pressure was 5,5 bar for the Durapore KVGL Sterile Filter, Hydrophilic modified PVDF, Durapore® 0.22 µm and 4,1 bar for the Optiscale or Mini Kleenpak KM5DFLP2S - or the flow through the filter declines to 0 mL/min.

In a further embodiment of the use described herein the simethicone is comprised in an antifoam agent. Examples of antifoam agents are antifoam C, FoamAway or ExCell Antifoam or any other DOW Q7-2587, 30% emulsion based product.

In a further embodiment of the use described herein the simethicone is depleted in a biotechnological process comprising at least one bind-and-elute step, such as a Protein A chromatography, including a sterile filtration, i.e. employing a filter with a pore size of 0.2 µm - 0.22 µm.

Optionally said biotechnological process can of course comprise further process steps e.g. depth filtration, particle filtration employing filters with a pore size of 0.45 µm-3 µm and further sterile filtration steps as well as unit operations such as diafiltration, ultrafiltration, CEX, AEX, viral inactivation and homogenization.

In a further aspect, what is described herein relates to a method of employing the described use wherein a product stream comprising simethicone and a biotechnological product is passed through the filter membrane.

As used herein the term "product stream" refers to a cell-free fluid from a heterogeneous cell culture fluid mixture that comprises a protein of interest or its isolated fractions thereof, like concentrates, dilutions of eluates etc. For the sake of clarity the product stream is also a "fluid stream" or "fluid flow" in the sense of this description.

### Figure

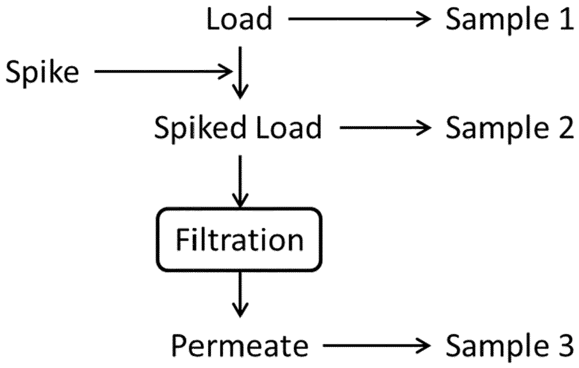

The Figure depicts a scheme for Sample Collection

### Example

An simethicone - and hence antifoam - depletion study was performed using different filters as detailed in Table 2

**Table 2. Filter Units & Chromatography Steps Investigated in Small Scale Spiking Study.**

| **Filter Series** | **At Scale Filter** | **Filter Area At-scale [cm²]** | **Material** | **Pore size** | **Small Scale Model** | **Filter Area Small Scale [cm²]** | **Scale Down Factor [-]** | **Loading Density [mL/cm²]** |
|---|---|---|---|---|---|---|---|---|
| 1 | Filter 3: Durapore KVGL Sterile Filter | 6900 | PVDF | 0.2 µm | Durapore® 0.22 µm Optiscale® 25mm NB | 3.5 | 1971 | 72.46 |
| 2 | Filter 6 and 8: Kleenpak Capsules | 3300 | Hydrophilic modified PVDF | 0.2 µm | Mini Kleenpak KM5DFLP2S | 20 | 165 | 8.1 |

In this example the biotechnological process comprised two bioreactors that were harvested independent of each other, depth and sterile filtered in filtration series 1, purified in a capture step, low pH virus inactivated (VIA) and pooled into the same bag during filtration series 2. Filtration series 1 consisted of three filtration steps where the third filtration step only consisted of one filter here a Durapore KVGL Sterile Filter (cf. Table 2), whereas filter steps 1 and 2 employed cellulose fiber based filters. Filtration series two consisted of 5 filtration steps, where the 6^{th} and the 8^{th} overall filtration step - i.e. the 3^{rd} and 5^{th} steps of filtration series two - consisted of a Kleenpak Capsule. In other words, the Kleenpak Capsule was used multiple times in the process. As specific in Table 3 below overall filter steps 4, 5 and 7 - i.e. filter steps 1, 2 and 4 of flirtation series two - employed PES based or cellulose based filters. An overview of the filtration steps and used filters is given in Table 3 below. All filters used in this example were smaller than the filters used at production scale. However, all filters were chosen in such a fashion that they represent the respective filters used at production scale. Hence the results as discussed below can be extrapolated to the filters of the production process.

**Table 3 Filters, matrices and unit operations as used in the example**

| Filtration series | Unit Operation | Parameter | Matrix | Small scale model |
|---|---|---|---|---|
| 1 | Filter 1 (=Filtration step 1 of series 1) | Type | Clarified Culture Supernatant | Depth Filter with Cellulose fibers & inorganic filter aid; applied load 2.1 L |
| 1 | Filter 2 (=Filtration step 2 of series 1) | Type | Clarified Culture Supernatant | Depth Filter with Cellulose fibers & inorganic filter aid; applied load 2.1L |
| 1 | Filter 3 (=Filtration step 3 of series 1) | Type | Clarified Culture Supernatant | Durapore® 0.22 µm Optiscale® 25mm NB, applied load 0.25L |
| 2 | Filter 4 (Filtration step 1 of series 2) | Type | Na-Acetat, TRIS pH adjusted | CA custom filter applied load 0.11L |
| 2 | Filter 5 (Filtration step 2 of series 2) | Type | Na-Acetat, TRIS pH adjusted | PES custom filter applied load 0.09L |
| 2 | Filter 6 (Filtration step 3 of series 2) | Type | Na-Acetat, TRIS pH adjusted | Mini Kleenpak KM5DFLP2S, applied load 0.16L |
| 2 | Filter 7 (Filtration step 3 of series 2) | Type | Na-Acetat, TRIS pH adjusted | PES custom filter applied load 0.09L |
| 2 | Filter 8 (Filtration step 5 of series 2) | Type | Na-Acetat, TRIS pH adjusted | Mini Kleenpak KM5DFLP2S, applied load 0.16L |

In correspondence to the ICH Q3A(R2) requirements the maximum tolerable dose was assumed to be 0.15 mg/day. Thus a 73.5 fold- change /2-log steps reduction of simethicone had to be demonstrated. FoamAway was spiked at doses of 1.2 - 120 mg/L simethicone (cf. Table 5) in front of each filter into the respective standard matrices for the respective process step. In detail for Filter 3 standard matrix was clarified culture supernatant (see Table 3), for Filter 8 the standard matrix was Na-Acetat, TRIS pH adjusted (raw materials in Table 4). As shown the Figure a sample was taken after spiking of the respective matrix prior to filtering (sample 2, Figure), another sample was taken after filtering (sample 3, Figure). Moreover a sample of the respective matrix was used as baseline value (sample 1, Figure).

**Table 4. List of Raw Materials**

| **Name** | **Material No.** | **Manufacturer** |
|---|---|---|
| FoamAway™ Irradiated AOF | A1036902 | Gibco |
| Na-acetate x 3 H₂O (EMSURE) | 1.06267.1000 | Merck |
| TRIS (EMPROVE) | 1.08386.1000 | Merck |

**Table 5. Theoretical Versus Actual Simethicone Study Spiking Levels used for Calculations.**

| **Parameter** | | **High Spike Level** | | **Medium Spike Level** | | **Low Spike Level** | |
|---|---|---|---|---|---|---|---|
| | UoM | Silicone | Simethicone^{a} | Silicone | Simethicone^{a} | Silicone | Simethicone^{a} |
| Simethicone Spike [ | mg/L | 45.45 | 120.00 | 9.09 | 24.00 | 0.91 | 2.40 |
| | | | | | | or | or |
| | | | | | | 0.45 | 1.20 |

| | | | | | | | |
|---|---|---|---|---|---|---|---|
| a 1 mg/L silicone equals 2.64 mg/L simethicone under the worst case assumption of no other silicone source in the sample. | | | | | | | |

The process was run at a standard flow rate of 0.000385 L/min/cm² membrane area which corresponds the maximum pumped volume/ min and filter area used at manufacturing scale through the above described filter arrangement. It was found that filter 3 blocked at 5.5 mg/L whereas filter 8 blocked at and 1.2 mg/L simethicone. Thus, under process conditions where the filters do not block, the simethicone and hence antifoam level has to be even lower. Dependent on the product concentration and initial simethicone concentration in the production bioreactor and filters that do not block, the simethicone and hence antifoam level are lower than the ICHQ3C limit (Table 2).

## Claims

1. Use of at least one filter membrane as detector of simethicone level.

2. Use according to claim 1, wherein the at least one filter membrane blocks at a simethicone level of between 1.2 mg/L - 5.5 mg/L and thus indicates a too high simethicone level.

3. Use according to claim 1, where the at least one filter membrane is a polyvinylidene fluoride based filter membrane.

4. Use according to claim 1, wherein the simethicone is comprised in an antifoam agent.

5. Use according to claim 1, wherein the simethicone is depleted in a biotechnological process comprising at least at least one bind-and-elute step, such as a Protein A chromatography, including a sterile filtration, i.e. employing a filter with a pore size of 0.2 µm - 0.22 µm.

6. Method of employing the use of claim 1, wherein a product stream comprising simethicone and a biotechnological product is passed through the filter membrane.
